# EUROPÄISCHE PATENTANMELDUNG

(11) **EP 1 428 592 A1**
(43) Veröffentlichungstag der Anmeldung: **16.06.2004**
(21) Anmeldenummer: 02406081.6
(22) Anmeldetag: 09.12.2002
(51) Int. Cl.: B21F 23/00, B21D 43/00, B65G 47/84, B65G 47/14, B21B 39/00

(54) **Drahtvereinzelungsvorrichtung**

(71) Anmelder: H.A. SCHLATTER AG, CH-8952 Schlieren Zürich (CH)
(72) Erfinder: Ruf, Roland, 8623 Wetzikon (CH)
(74) Vertreter: Roshardt, Werner Alfred, Dipl.-Phys.

(57) **Zusammenfassung**

Eine Vorrichtung zum Vereinzeln von Drähten (1) eines Drahtbündels oder ähnlichen langen, dünnen gebündelten Objekten umfasst ein Auskämmrad (6), das um eine Auskämmrad-Drehachse (11) drehbar ist und eine im Wesentlichen kreiszylindermantelförmige Oberfläche hat, deren Zylinderachse mit der Auskämmrad-Drehachse (11) zusammen fällt. In der kreiszylindermantelförmigen Oberfläche des Auskämmrads (6) ist wenigstens eine parallel zur Auskämmrad-Drehachse (11) verlaufende Auskämmnut (12) derart ausgebildet, dass sie zum Auskämmen eines einzelnen Drahts (1) aus dem Drahtbündel geeignet ist, um den Draht (1) dadurch zu vereinzeln. Die Drahtvereinzelungsvorrichtung umfasst weiter eine Zuführfläche (2), die zur Aufnahme des Drahtbündels und zum Zuführen der mit ihrer Längsrichtung parallel zur Auskämmrad-Drehachse (11) angeordneten Drähte (1) zum Auskämmrad (6) ausgebildet ist. Gemäss der Erfindung ist das Auskämmrad (6) derart ausgebildet, dass der zum Auskämmen des Drahts (1) wirksame Querschnitt der Auskämmnut (12) wahlweise einstellbar ist. Die Möglichkeit zur wahlweisen Einstellung des wirksamen Querschnitts der Auskämmnut (12) erlaubt eine rasche und einfache Anpassung der Drahtvereinzelungsvorrichtung zur Verarbeitung von Drähten mit verschiedenen Drahtdurchmessern.

## Beschreibung

### Technisches Gebiet

Die Erfindung betrifft eine Vorrichtung zum Vereinzeln von Drähten eines Drahtbündels oder ähnlichen langen, dünnen gebündelten Objekten, die insbesondere zur Verwendung für die Vereinzelung von Querdrähten in einer Anlage zum Herstellen von Drahtgittern aus einander kreuzenden und an den Kreuzungspunkten miteinander verschweissten Längs - und Querdrähten ausgebildet ist.

### Stand der Technik

Bisher bekannte Drahtvereinzelungsvorrichtungen der eingangs genannten Art, die insbesondere zur Herstellung von Drahtgittern wie z.B. Baustahlmatten, Gitterstrukturen von Einkaufswagen, Lagergestellen u.ä. geeignet sind, ermöglichen zwar die Vereinzelung der Drähte mit einer hohen Produktionsrate, solange sämtliche Drähte jeweils im Wesentlichen identisch zueinander ausgebildet sind. Sobald jedoch mittels derselben Vereinzelungsvorrichtung Drähte mit unterschiedlichen Durchmessern verarbeitet werden sollen, sind zeitaufwändige und komplizierte Umrüstungsarbeiten erforderlich, um die Vereinzelungsvorrichtungen an die geänderten Drahtdurchmesser anzupassen.

### Darstellung der Erfindung

Aufgabe der Erfindung ist die Angabe einer Drahtvereinzelungsvorrichtung, welche rasch und einfach zur Verarbeitung von Drähten mit verschiedenen Drahtdurchmessern anpassbar ist.

Die Lösung der Aufgabe ist durch die Merkmale des Anspruchs 1 definiert. Gemäss der Erfindung umfasst eine Vorrichtung zum Vereinzeln von Drähten eines Drahtbündels oder ähnlichen langen, dünnen gebündelten Objekten ein Auskämmrad (auch als Mitnehmerrad bezeichnet), das um eine Auskämmrad-Drehachse drehbar ist und eine im Wesentlichen kreiszylindermantelförmige Oberfläche hat, deren Zylinderachse mit der Auskämmrad-Drehachse zusammen fällt. In der kreiszylindermantelförmigen Oberfläche des Auskämmrads ist wenigstens eine parallel zur Auskämmrad-Drehachse verlaufende Auskämmnut (auch als Mitnehmernut bezeichnet) derart ausgebildet, dass sie zum Auskämmen bzw. Mitnehmen eines einzelnen Drahts aus dem Drahtbündel geeignet ist, um den Draht dadurch zu vereinzeln. Die Drahtvereinzelungsvorrichtung umfasst weiter eine Zuführfläche, die zur Aufnahme des Drahtbündels und zum Zuführen der mit ihrer Längsrichtung parallel zur Auskämmrad-Drehachse angeordneten Drähte zum Auskämmrad ausgebildet ist. Gemäss der Erfindung ist das Auskämmrad derart ausgebildet, dass der zum Auskämmen des Drahts wirksame Querschnitt der Auskämmnut wahlweise einstellbar ist.

Unter dem zum Auskämmen des Drahts wirksamen Nutquerschnitt wird der in Bezug auf die Nutlängsrichtung lichte Querschnitt der Auskämmnut verstanden. Die Zuführung der Drähte zum Auskämmrad erfolgt in der Regel quer zu ihrer Längsrichtung (und somit quer zur Auskämmrad-Drehachse) über die Zuführfläche, die zumindest während einem Auskämmvorgang stationär zur Auskämmrad-Drehachse angeordnet ist. Grundsätzlich sind jedoch auch andere Arten der Querdrahtzuführung zum Auskämmrad möglich.

Indem der zum Auskämmen der Drähte wirksame Querschnitt der Auskämmnut wahlweise einstellbar ausgebildet ist, wird die Möglichkeit geschaffen, die Drahtvereinzelungsvorrichtung durch eine Einstellung dieses Nutquerschnitts rasch und einfach zur Verarbeitung von Drähten mit verschiedenen Drahtdurchmessern anzupassen.

Vorzugsweise umfasst die Drahtvereinzelungsvorrichtung die Mittel zum automatischen Einstellen des wirksamen Querschnitts der Auskämmnut, wobei diese Einstellmittel motorisch betreibbar sind. Dadurch wird eine besonders rasche Anpassung der Drahtvereinzelungsvorrichtung an verschiedene Drahtdurchmesser ermöglicht.

Gemäss einer bevorzugten Ausführungsart der Erfindung umfasst das Auskämmrad eine erste Scheibe, die durch erste Scheibenantriebsmittel zur Drehung um die Auskämmrad-Drehachse angetrieben wird. Diese erste Scheibe hat eine im Wesentlichen kreiszylindermantelförmige Oberfläche, welche eine erste Partie der kreiszylindermantelförmige Oberfläche des Auskämmrads bildet und in welcher eine erste Partie der Auskämmnut ausgebildet ist. Das Auskämmrad umfasst weiter eine zweite Scheibe, die durch zweite Scheibenantriebsmittel zur Drehung um die Auskämmrad-Drehachse angetrieben wird und eine im Wesentlichen kreiszylindermantelförmige Oberfläche hat, welche eine zweite Partie der kreiszylindermantelförmige Oberfläche des Auskämmrads bildet und in welcher eine zweite Partie der Auskämmnut ausgebildet ist. Die zweite Scheibe ist bezüglich der ersten Scheibe parallel zur Auskämmrad-Drehachse versetzt angeordnet. Weiter umfasst die Drahtvereinzelungsvorrichtung gemeinsame Scheibantriebssteuerungsmittel zur Steuerung der ersten und der zweiten Scheibenantriebsmittel derart, dass die beiden Scheiben synchron zueinander, jedoch um einen wählbar einstellbaren, zwischen zwei Einstellvorgängen aber konstanten Phasenwinkel zueinander verschoben um die Auskämmrad-Drehachse (11) rotieren. Dabei ist die erste Scheibe drehfest mit den ersten Scheibenantriebsmittel gekoppelt, und die zweite Scheibe ist drehfest mit den zweiten Scheibenantriebsmittel gekoppelt. Der Phasenwinkel bzw. die Phasenverschiebung zwischen der ersten und der zweiten Scheibe ist insbesondere derart einstellbar, dass sich der Nutquerschnitt der in der ersten Scheibe ausgebildeten Partie der Auskämmnut mit dem Nutquerschnitt der in der zweiten Scheibe ausgebildeten Partie der Auskämmnut in zur Auskämmrad-Drehachse paralleler Richtung (d.h. in Nutlängsrichtung) teilweise oder vollständig überlappen. Dadurch kann im Vergleich zu vollständig überlappenden Nuten eine Verkleinerung des lichten Querschnitts der Auskämmnut bewirkt werden.

Vorzugsweise ist bei einem Auskämmrad mit zwei Schieben die in der ersten Scheibe ausgebildete erste Partie der Auskämmnut identisch zu der in der zweiten Scheibe ausgebildete zweiten Partie der Auskämmnut ausgebildet ist. Die Scheiben können insbesondere in ihren an die kreiszylindermantelförmige Oberfläche angrenzenden Bereichen, in welchen die Auskämmnut ausgebildet ist, vollständig identisch zueinander ausgebildet sein. Die identische Ausbildung der beiden Scheiben vermindert die Kosten für deren Herstellung

Weiter können die bei einer Querdrahtvereinzelungsvorrichtung mit einem Auskämmrad, das zwei Scheiben aufweist, die Scheibenantriebsmittel wenigstens einer Scheibe einen ersten Antriebsriemen zum Antreiben dieser Scheibe umfassen, wobei dieser erste Antriebsriemen gleichzeitig als Transportriemen ausgebildet ist, der zur Förderung der vom Antriebsrad vereinzelten Drähte vom Antriebsrad weg dient. Die Benutzung desselben Riemens sowohl für den Drahttransport als auch für den Antrieb der Scheibe ermöglicht eine einfache und kostengünstige Konstruktion der Querdrahtvereinzelungsvorrichtung.

Vorteilhafterweise umfassen die Scheibenantriebssteuerungsmittel einer Drahtvereinzelungsvorrichtung mit einem Auskämmrad, das mit zwei Scheiben versehen ist, ein mechanisches Getriebe, welches die ersten Scheibenantriebsmittel mit den zweiten Scheibenantriebsmittel mechanisch koppelt. Durch die mechanische Kopplung wird eine einfache und zuverlässige Synchronisierung der ersten mit der zweiten Scheibe ermöglicht.

Das mechanische Getriebe kann einen zweiten Antriebsriemen oder eine Antriebskette umfassen, welcher bzw. welche die ersten Scheibenantriebsmittel mittels eines Zugtrums und eines Leertrums drehfest mit den zweiten Scheibenantriebsmittel koppelt, sowie Einstellmittel, die zur wahlweisen Einstellung der relativen Länge des Zugtrums zum Leertrum ausgebildet sind. Durch die Einstellung der relativer Länge vom Zugtrum zum Leertrum kann auf einfache Art die Phasenverschiebung zwischen der ersten und der zweiten Scheibe und damit der Querschnitt der Auskämmnut eingestellt werden.

Vorzugsweise umfassen die Einstellmittel zur Einstellung der relativen Trumlänge ein automatisch (d.h. motorisch) betätigbares Stellglied (40). Dadurch wird die automatische Einstellung des Querschnitts der Auskämmnut ermöglicht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Querdrahtbereitstellungseinrichtung für eine Gitterschweissanlage gemäss einer bevorzugten Ausführungsart der Erfindung in einer vereinfachten, perspektivischen Teilansicht von schräg vorne;
- Fig. 2: eine vereinfachte, schematische Querschnittansicht auf die Querdrahtbereitstellungseinrichtung aus Fig. 1;
- Fig. 3: eine vereinfachte perspektivische Detailansicht auf einen Universalschlitten der Querdrahtbereitstellungseinrichtung aus Fig. 1;
- Fig. 4: eine vereinfachte perspektivische Ansicht auf ein Antriebsgetriebe der Querdrahtbereitstellungseinrichtung aus Fig. 1.

Grundsätzlich sind in den Figuren gleiche Teile mit gleichen Bezugszeichen versehen.

### Wege zur Ausführung der Erfindung

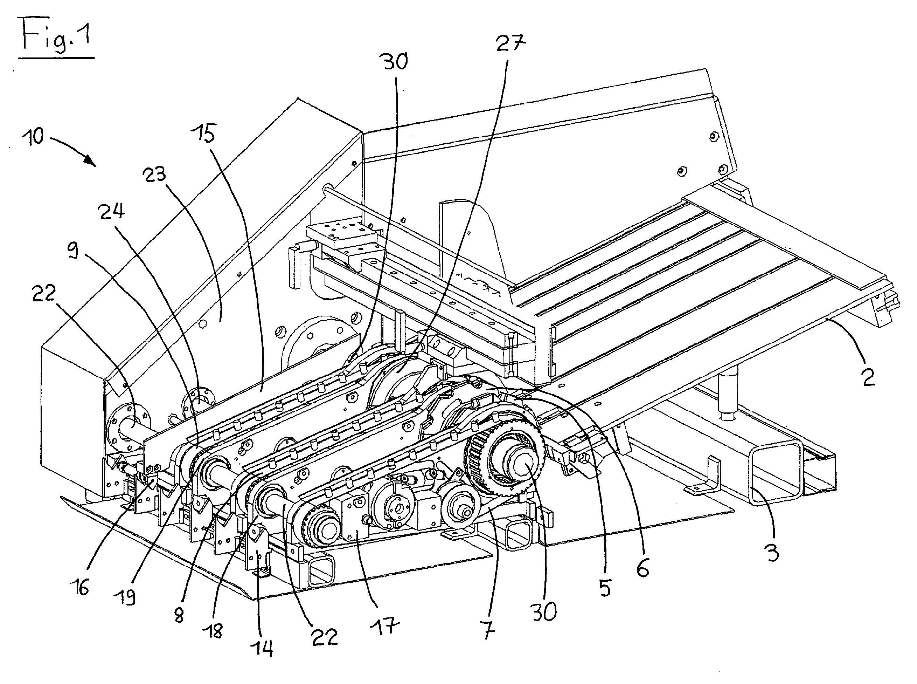

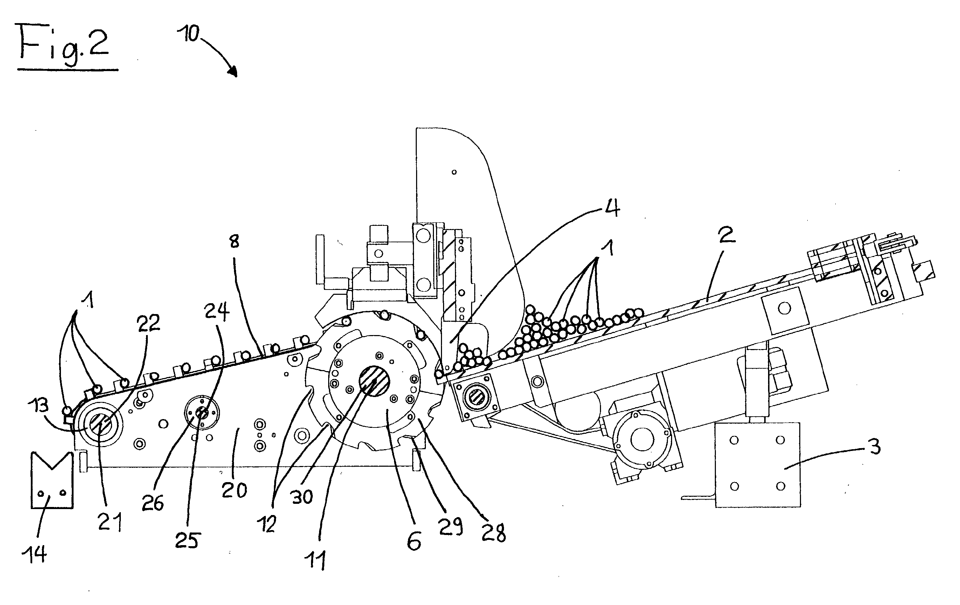

Die in Fig. 1 und 2 dargestellte Querdrahtbereitstellungseinrichtung 10 ist Teil einer Gitterschweissanlage zum Herstellen von Drahtgittern aus einander kreuzenden und an den Kreuzungspunkten miteinander verschweissten Längs- und Querdrähten 1. Die Gitterschweissanlage weist eine Schweissmaschine (nicht dargestellt) zum Verschweissen eines Querdrahts 1 mit einer Mehrzahl von Längsdrähten und eine Querdrahtzuführungseinrichtung zum Aufnehmen des Querdrahts 1 und zum Zuführen des Querdrahts 1 an die Schweissmaschine auf. Die Transportrichtung des Querdrahts vom Ort seiner Aufnahme bis zur Schweissmaschine wird als Zuführrichtung bezeichnet. Die Querdrahtzuführungseinrichtung umfasst die in Fig. 1 und 2 dargestellte Querdrahtbereitstellungseinrichtung 10. Diese dient zur bundweisen Aufnahme von Querdrähten 1, zur Vereinzelung der Querdrähte 1 sowie zur Bereitstellung der vereinzelten Querdrähte 1 nacheinander in einer durch die Querdrahtbereitstellungseinrichtung 10 definierten Bereitstellungsposition. Die Querdrahtzuführungseinrichtung umfasst weiter eine Querdraht-Transporteinrichtung (nicht dargestellt), welche die vereinzelten Querdrähte 1 nacheinander in der Bereitstellungsposition abholt und von der Bereitstellungsposition in eine vorgegebene Querdrahtsollposition in der Schweissmaschine transportiert.

Für den Betrieb der Gitterschweissanlage wird ein loser Bund aus einer Vielzahl von Querdrähten 1 auf eine Plattform 2 der Querdrahtbereitstellungseinrichtung 10 geladen, die auf einem stationären Maschinengestell 3 der Querdrahtbereitstellungseinrichtung 10 angeordnet ist. Die Oberseite der Plattform ist 2 nach Art einer geneigten Ebene ausgebildet und angeordnet. Sie dient als Auflage- bzw. als Zuführfläche für die Querdrähte 1. Die Querdrähte 1 werden mit ihrer Längsrichtung quer zu den Falllinien der geneigten Zuführfläche (und somit horizontal) ausgerichtet, so dass sie aufgrund der Schwerkraft quer zu ihrer Längsrichtung auf der Zuführfläche den Falllinien entlang nach unten (d.h. in Zuführrichtung) rollen oder gleiten. Im Bereich des unteren (in Bezug auf die Zuführrichtung vorderen) horizontalen Randes der Zuführfläche ist ein Rückweisorgan 4 (auch als Abstreiforgan bezeichnet) über der Zuführfläche derart angeordnet, dass zwischen dem Rückweisorgan 4 und der Zuführfläche ein Kontrollspalt gebildet wird. Die Höhe dieses Kontrollspalts ist derart bemessen, dass die Querdrähte 1 den Kontrollspalt lediglich als einlagige Drahtschicht mit geringem Spiel passieren können. Querdrähte 1, die auf der untersten Querdrahtlage aufliegen, werden vom Rückweisorgan 4 zurückgewiesen.

Die Querdrahtbereitstellungseinrichtung 10 umfasst weiter mehrere Auskämmräder 5, 6, von denen in der Darstellung der Fig. 1 zwei dargestellt sind. Die Auskämmräder 5, 6 sind im Wesentlichen identisch zueinander ausgebildet und in Bezug auf die Zuführrichtung unmittelbar vor dem Kontrollspalt parallel zueinander um eine gemeinsame (virtuelle) Drehachse 11 drehbar angeordnet. Die als Auskämmrad-Drehachse 11 bezeichnete gemeinsame Drehachse 11 der Auskämmräder 5, 6 verläuft parallel zur Ebene der Zuführfläche und senkrecht zu den Falllinien dieser Ebene (d.h. insgesamt parallel zur Querdrahtlängsrichtung und somit horizontal). Die Auskämmräder 5, 6 haben eine im Wesentlichen kreiszylindermantelförmige Umfangsfläche und sind derart um die (virtuelle) Drehachse 11 drehbar, dass die Drehachse 11 mit der (geometrischen) Zylinderachse der Umfangsfläche übereinstimmt. Die Auskämmräder 5, 6 sind bezüglich der Zuführfläche derart angeordnet, dass der in Bezug auf die Zuführrichtung vordere Rand der geneigten Zuführfläche mit geringem Spielabstand unmittelbar hinter einer im Wesentlichen vertikalen Partie der Umfangsflächen der Auskämmräder 5, 6 liegt.

In den Umfangsflächen der Auskämmräder 5, 6 sind in regelmässigen tangentialen Abständen jeweils zueinander identische Nuten 12 (Auskämmnuten) ausgebildet, die sich parallel zur Auskämmrad-Drehachse 11 erstrecken. Während des Betriebs der Gitterschweissanlage rotieren die Auskämmräder 5, 6 synchron zueinander kontinuierlich um die Auskämmrad-Drehachse 11, wobei die Auskämmräder 5, 6 derart zueinander synchronisiert sind, dass einander entsprechende Auskämmnuten 12 der verschiedenen Auskämmräder 5, 6 je eine Serie (entsprechend der Anzahl der Auskämmräder 5, 6) von Auskämmnuten 12 bilden, die in zur Auskämmrad-Drehachse 11 paralleler Richtung zueinander fluchten. Die Drehrichtung der Auskämmräder 5, 6 ist derart, dass die unmittelbar vor dem vorderen Rand der Zuführflächen liegenden Partien der Umfangsflächen der Auskämmräder 5, 6 nach oben laufen. Dadurch wird bewirkt, dass jeder durch die Schwerkraft auf der Zuführfläche nach vorne und unten geförderte Querdraht 1 unmittelbar nach dem Passieren des Kontrollspalts jeweils einzeln in eine der Serien von zueinander fluchtenden Auskämmnuten 12 gefördert wird. Die Dicke der Auskämmnuten 12 ist dem Durchmesser der Querdrähte 1 derart angepasst, dass in jeder Auskämmnut jeweils lediglich nur ein einziger Querdraht 1 aufgenommen wird. Die in den Auskämmnuten 12 aufgenommenen Querdrähte 1 werden von den rotierenden Auskämmrädern 5, 6 nach oben mitgenommen und auf einer kreisförmigen Bahn entsprechend dem radialen Abstand der Auskämmnuten 12 zur Auskämmrad-Drehachse 11 von der Zuführfläche weg gefördert. Die Auskämmräder 5, 6 bewirken die eigentliche Vereinzelung der Querdrähte 1, denn die zuvor aneinanderliegenden Querdrähte 1 sind nun einzeln in den Auskämmnutserien 12 der Auskämmräder 5, 6 angeordnet, wobei die Auskämmnutserien 12 in den Umfangsflächen der Auskämmräder 5, 6 in tangentialer Richtung voneinander beabstandet sind.

Die Querdrahtbereitstellungseinrichtung 10 ist weiter mit mehreren Transportbändern 7, 8, 9 versehen, von denen in der Darstellung der Fig. 1 drei dargestellt sind. Jedes Transportband 7, 8, 9 ist nach Art eines endlos umlaufenden Förderbandes ausgebildet, dessen oberes Trum während des Betriebs der Gitterschweissanlage die Querstäbe 1 von den Auskämmrädern und der Zuführfläche weg nach vorne und unten fördert. Die Transportbänder 7, 8, 9 sind je identisch zueinander ausgebildet und in Bezug auf die Richtung der Auskämmrad-Drehachse 11 parallel zueinander angeordnet. Während des Betriebs laufen die Transportbänder 7, 8, 9 je in einer zur Auskämmrad-Drehachse 11 senkrechten (und somit vertikalen) Ebene endlos um. Jedes Transportband 7, 8, 9 ist auf seiner Aussenseite mit nach aussen vorstehenden Nocken versehen, wobei die Bezeichnung "aussen" im vorliegenden Zusammenhang in Bezug auf die Umlaufrichtung des Transportbandes 7, 8, 9 zu verstehen ist. Die Nocken sind in regelmässigen Abständen über die gesamte Bandlänge verteilt angeordnet. Während des Betriebs laufen alle Transportbänder 7, 8, 9 synchron zueinander, wobei die Transportbänder 7, 8, 9 derart zueinander synchronisiert sind, dass einander entsprechende Nocken der verschiedenen Transportbänder 7, 8, 9 je eine Serie (entsprechend der Anzahl der Transportbänder) von Nocken bilden, die in Bezug auf die Richtung der Auskämmrad-Drehachse 11 parallel zueinander angeordnet sind. In Bezug auf die durch die Förderrichtung des Transportbandes 7, 8, 9 bestimmte Zuführrichtung wird zwischen zwei benachbarten Nockenserien jeweils ein Transportfach definiert, das zur Aufnahme eines Querdrahts 1 dient. Jeder der in den Nuten 12 der Auskämmräder 5, 6 aufgenommenen Querdrähte 1 wird durch die rotierenden Auskämmräder 5, 6 auf einer kreisförmigen Bahn von der Zuführfläche auf die Transportbänder 7, 8, 9 gefördert und dort einzeln je in einem Transportfach abgelegt, wobei die Länge des Transportwegs der Querdrähte 1 von der Zuführfläche bis auf die Transportbänder ungefähr ein Drittel des der kreisförmigen Bahn entsprechenden Kreisumfangs beträgt.

Nachdem die Querdrähte einzeln in die Transportfächer abgelegt sind, werden sie durch das obere Trum der Transportbänder 7, 8, 9 in einer durch dieses Trum definierten Zuführrichtung schräg nach vorne und unten gefördert. Im Bereich der Transportband-Antriebsrollen 13, die zugleich als vorderste Umlenkrolle von jedem Transportband 7, 8, 9, ausgebildet sind, werden die Querdrähte 1 nacheinander in einen stationären Querdrahthalter 14 der Querdrahtbereitstellungseinrichtung abgelegt bzw. abgeworfen. Dieser Querdrahthalter 14 umfasst eine Mehrzahl von identisch ausgebildeten plattenförmigen Halteteile, in deren Oberseite je eine V-förmige Nut ausgebildet ist. Die Halteteile sind derart angeordnet, dass ihre V-förmigen Nuten in zur Auskämmrad-Drehachse 11 paralleler Richtung zueinander fluchten. Durch den Querdrahthalter 14 wird die Bereitstellungsposition der Querdrähte 1 in Bezug auf die Richtungen senkrecht zur Querdrahtlängrichtung definiert.

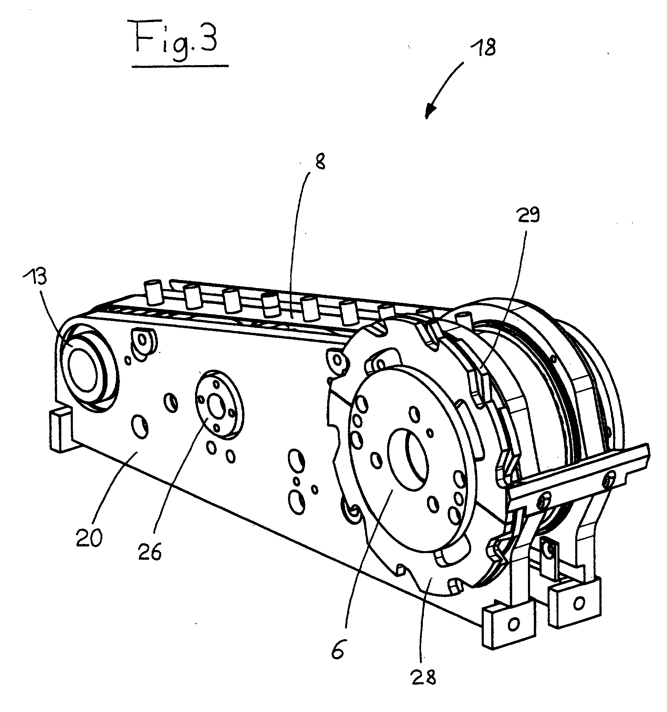

Um eine automatische Anpassung der Querdrahtbereitstellungseinrichtung auf Querdrähte mit unterschiedlichen Drahtlängen zu ermöglichen, ist jedes Transportband 7, 8, 9 als Teil einer Montageeinheit 17, 18, 19 ausgebildet, welche als Universalschlitten 17, 18, 19 bezeichnet wird und als Ganzes parallel zur Auskämmrad-Drehachse 11 (d.h. quer zur Zuführrichtung) bezüglich dem stationären Maschinengestell 3 der Querdrahtbereitstellungseinrichtung 10 verschiebbar ist. In Fig. 1 sind drei solche Universalschlitten 17, 18, 19 dargestellt, einer davon in teilweise weggebrochener Darstellung. Fig. 3 zeigt den mittleren Universalschlitten 18 aus Fig. 1 in einer perspektivischen Ansicht in Alleinstellung. In Fig. 2 ist derselbe Schlitten 18 in einer Ansicht von der Seite dargestellt, zusammen mit dem Rest der Querdrahtbereitstellungseinrichtung 10 in teilweise geschnittener Darstellung.

Der in Fig. 1-3 dargestellte Universalschlitten 18 umfasst einen als Basis- oder Tragstruktur des Universalschlittens 18 ausgebildeten Schlittenkörper 20. Zuvorderst am Schlittenkörper 20 ist die Antriebsrolle 13 für das Transportband 8 bezüglich dem Schlittenkörper 20 um eine (virtuelle) Drehachse 21 drehbar gelagert, die zur Auskämmrad-Drehachse 11 parallel ist und als Antriebsrollen-Drehachse 21 bezeichnet wird. Das Transportband 8 ist auf seiner in Bezug auf die Umlaufrichtung inneren Seite nach Art eines Zahnriemens ausgebildet und mit einer Zahnung versehen, welche mit einer entsprechenden Zahnung kämmt, die auf der äusseren Umfangsfläche der Antriebsbsrolle 13 ausgebildet ist. Insgesamt dient die Transportband-Antriebsrolle 13 somit als Antriebsritzel 13 für das nach Art eines Zahnriemens ausgebildete Transportband 8.

Die Transportband-Antriebsrolle 13 wird durch eine zur Antriebsrollen-Drehachse 13 koaxial (und somit parallel zur Antriebsrad-Drehachse) angeordnete Antriebswelle 22 (Transportband-Antriebswelle 22) zur Drehung um die Antriebsrollen-Drehachse 21 angetrieben. Die Transportband-Antriebswelle 22 ist in zwei Seitenwänden 23 bezüglich diesen in Wellenlängsrichtung unverschiebbar und um die Antriebsrollen-Drehachse 21 drehbar gelagert. Die beiden Seitenwände 23 sind je beidseitig seitlich ausserhalb der durch die Transportbänder 7, 8, 9 gebildeten Querdraht-Zuführstrecken angeordnet, wobei diese Seitenwände 23 als Teil des stationären Maschinengestells 3 der Querdrahtbereitstellungseinrichtung 10 ausgebildet sind. Um die Verschiebbarkeit des Universalschlittens 18 parallel zur Auskämmrad-Drehachse 11 zu gewährleisten, ist die Transportband-Antriebsrolle 13 mit der Transportband-Antriebswelle 22 zwar drehfest, jedoch in Wellenlängsrichtung bezüglich der Transportband-Antriebswelle 22 verschiebbar gekoppelt.

Für den Antrieb des Universalschlittens 18 zum Zwecke seiner Verschiebung quer zur Zuführrichtung bezüglich dem stationären Maschinengestell 3 der Querdrahtbereitstellungseinrichtung 10 ist eine mit einem Aussengewinde versehene Gewindespindel 24 vorgesehen, die sich parallel zur Auskämmrad-Drehachse 11 erstreckt und um eine zur Auskämmrad-Drehachse 11 parallele Drehachse 25 (Spindelachse 25) drehbar ist. Die Gewindespindel 24 ist in den beiden gleichen Seitenwänden 23 bezüglich diesen in Spindellängsrichtung unverschiebbar und um die Spindelachse 25 drehbar gelagert, in denen auch die Transportband-Antriebswelle 22 gelagert ist. Die Gewindespindel 24 durchsetzt den Schlittenkörper 20 und eine Schlossmutter 26, die in einem mittigen Bereich des Schlittenkörpers 20 angeordnet und mit diesem in Spindellängsrichtung (d.h. in Richtung parallel zur Auskämmrad-Drehachse 11) unverschiebbar gekoppelt ist. Die Schlossmutter ist mit einem dem Aussengewinde der Gewindespindel 24 entsprechenden Innengewinde versehen. Sie ist als teilbare Mutter ausgebildet, wobei sie durch ein Steuerungssignal gesteuert automatisch wahlweise geschlossen und wieder geöffnet werden kann. In geschlossenem Zustand ist die Schlossmutter 26 mit dem Gewinde der Gewindespindel 24 in Eingriff. Sie wirkt dann mit der Gewindespindel 24 zusammen als Spindel-Mutter-Trieb, welcher bei einer Rotation der Gewindespindel 24 um die Spindelachse 25 die Schlossmutter 26 und den mit dieser gekoppelten Universalschlitten 18 in Richtung der Spindelachse 25 (d.h. in Spindellängsrichtung) linear verschiebt. In geöffnetem Zustand ist die Schlossmutter 26 ausser Eingriff mit der Gewindespindel 24, so dass in diesem Zustand eine Rotation der Gewindespindel 24 keinen Einfluss auf die Position des Universalschlittens 18 in Spindellängsrichtung hat.

Sämtliche Universalschlitten 17, 18, 19 der in Fig. 1 und 2 dargestellten Querdrahtbereitstellungseinrichtung 10 sind hinsichtlich dem Transportband-Antrieb und dem Antrieb zum Zwecke des Verschiebens der Universalschlitten 17, 18, 19 quer zur Zuführrichtung identisch ausgebildet. Die Universalschlitten 17, 18, 19 sind in Bezug auf die Auskämmrad-Drehachse 11 parallel zueinander angeordnet, wobei die Transportband-Antriebsrollen 13 der verschiedenen Universalschlitten 17, 18, 19 von einer einzigen gemeinsamen Transportband-Antriebswelle 22 angetrieben werden. Dadurch wird auf einfache Art eine Synchronisation der Transportbänder 7, 8, 9 der verschiedenen Universalschlitten 17, 18, 19 erreicht. Weiter werden auch die Schlossmuttern 26 der verschiedenen Universalschlitten 17, 18, 19 von einer einzigen gemeinsamen Gewindespindel 24 angetrieben. Hingegen werden die Schlossmuttern 26 der Universalschlitten 17, 18, 19 individuell und unabhängig voneinander gesteuert, um sie zu öffnen oder zu schliessen. Dadurch wird die Möglichkeit geschaffen, die einzelnen Universalschlitten 17, 18, 19 unabhängig voneinander quer zur Zuführrichtung zu verschieben, obwohl sie von einer gemeinsamen Gewindespindel 24 angetrieben werden.

Die in Fig. 1-3 dargestellten Universalwagen 17, 18, 19 sind weiter mit einem Auskämmrad 5, 6 zum Auskämmen (Vereinzeln) der Querdrähte 1 und/oder einem Stützrad 27 zum Stützen der Querdrähte 1 und/oder einem Führungsschild 15 zum Festlegen der Position der Querdrähte 1 in Querdrahtlängsrichtung versehen, wobei die Auskämmräder 5, 6, die Stützräder 27 und die Führungsschilder 15 ebenfalls zusammen mit dem Universalwagen 17, 18, 19, an dem sie angeordnet sind, quer zur Zuführrichtung verschiebbar sind. Der in Fig. 1 in Bezug auf die Zuführrichtung links angeordnete Universalwagen 17, der in teilweise weggebrochener Darstellung dargestellt ist, ist auf seiner rechten Seite mit einem ersten Auskämmrad 5 versehen. Der in Fig. 1 in der Mitte dargestellte Universalwagen 18, der weiter auch in den Fig. 2 und 3 dargestellt ist, ist auf seiner linken Seite in Bezug auf die Zuführrichtung mit einem zweiten Auskämmrad 6 versehen, dass in Bezug auf eine vertikale Spiegelebene quer zur Zuführrichtung spiegelsymmetrisch, sonst aber im Wesentlichen identisch zum ersten Auskämmrad 5 ausgebildet ist. Der in Fig. 1 in Bezug auf die Zuführrichtung aussen rechts angeordnete Universalwagen 19 ist auf seiner linken Seite mit einem Stützrad 27 zum Stützen der Querdrähte 11 während deren Transport in den Auskämmnuten 12 der Auskämmräder 5, 6 versehen. Der Radius des Stützrads 27 entspricht ungefähr dem radialen Abstand des Nutbodens der Auskämmnuten 12 von der Auskämmrad-Drehachse 11. Auf der rechten Seite ist dieser Universalwagen 19 mit einem vertikalen Führungsschild 15 versehen, der auf die rechtsseitigen Längsenden der Querdrähte 1 einwirkt, um sie in Bezug auf die Querdrahtlängsrichtung zu positionieren, wenn die Querdrähte 1 auf den Transportbändern 7, 8, 9 dem Führungsschild 15 entlang gefördert werden.

Bei dem in Fig. 1-3 dargestellten Universalschlitten 18 ist im hintersten Bereich des Schlittenkörpers 20 das Auskämmrad 6 bezüglich dem Schlittenkörper 20 um die Auskämmrad- Drehachse 11 drehbar im Schlittenkörper 20 gelagert. Das Auskämmrad 6 umfasst eine erste kreisringförmige Auskämmscheibe 28 (Hauptauskämmscheibe 28), die bezüglich dem Schlittenkörper 28 um die Auskämmrad-Drehachse 11 drehbar gelagert ist. Die Hauptauskämmscheibe 28 wird durch eine zur Auskämmrad-Drehachse 11 koaxial angeordnete Antriebswelle 30 (Auskämmrad-Antriebswelle 30) zur Drehung um ihre Drehachse 11 angetrieben. Die Auskämmrad-Antriebswelle 30 ist in den beiden gleichen Seitenwänden 23 des stationären Maschinengestells 3 bezüglich diesen Seitenwänden 23 in Wellenlängsrichtung unverschiebbar und um die Auskämmrad-Drehachse 11 drehbar gelagert, in denen auch die Transportband-Antriebswelle 22 gelagert ist. Um die Verschiebbarkeit des Universalschlittens 18 parallel zur Auskämmrad-Drehachse 11 zu gewährleisten, ist die Hauptauskämmscheibe 28 mit der Auskämmrad-Antriebswelle 30 zwar drehfest, jedoch in Wellenlängsrichtung bezüglich der Auskämmrad-Antriebswelle 30 verschiebbar gekoppelt.

Das Auskämmrad 6 umfasst weiter eine zweite kreisringförmige Auskämmscheibe 29 (Hilfsauskämmscheibe 29), die bezüglich dem Schlittenkörper 20 um die Auskämmrad-Drehachse 11 drehbar gelagert ist. Die Hilfsauskämmscheibe 29 ist parallel zur Hauptauskämmscheibe 28 und unmittelbar neben derselben auf dem Universalschlitten 18 angeordnet. An der Hilfsauskämmscheibe 29 ist ein kreiszylinderstumpfförmiges Ritzel angebracht, das koaxial zur Auskämmrad-Drehachse 11 angeordnet ist. Auf seiner Aussenumfangsfläche ist das Ritzel mit einer Zahnung versehen, welche mit der Zahnung des Transportbands 8 kämmt, welches das Ritzel teilweise umschlingt. Das Ritzel dient als Antriebsritzel für die Hilfsauskämmscheibe 29 und gleichzeitig als Umlenkrolle für das Transportband 8. Das Ritzel der Hilfsauskämmscheibe 29 ist derart ausgebildet und angeordnet, dass es einerseits durch das Transportband 8 nach Art eines Antriebs- oder Transmissionsriemens zur Drehung um die Auskämmrad-Drehachse 11 angetrieben wird und dadurch die mit dem Ritzel fest verbundene Hilfsauskämmscheibe 29 zur Drehung um die Auskämmrad-Drehachse 11 antreibt. Andererseits lenkt das Ritzel der Hilfsauskämmscheibe 29 das Transportband 8 derart um, dass sein oberes Trum auf der gewünschten Bahn vom Auskämmrad 6 weg nach vorne und unten zur Transportband-Antriebsrolle 13 läuft, um die Querstäbe 1 auf dieser Bahn vom Auskämmrad 6 weg zu fördern. Das Transportband 8 hat somit zum Einen die Funktion eines Förderbandes, wobei es die Querstäbe 8 auf seinem oberen Trum fördert. Zum Andern hat das von der Transportband-Antriebswelle 22 und der Transportband-Antriebsrolle 13 angetriebene Transportband 8 aber auch die Funktion eines Antriebsriemens, welcher die Hilfsauskämmscheibe 29 zur Drehung um die Auskämmrad-Drehachse 11 antreibt, wobei das obere Trum des Transportbands 8 als Zugtrum und das untere Trum als Leertrum wirken.

Die kreisringförmige Hilfsauskämmscheibe 29 wird zwar in ihrem Zentrum von der Auskämmrad-Antriebswelle 30 durchsetzt. Die Hilfsauskämmscheibe 29 ist aber bezüglich der Auskämmrad-Antriebswelle 30 sowohl in Wellenlängsrichtung verschiebbar als auch um die Auskämmrad-Drehachse 11 drehbar. Insgesamt wird durch die Anordnung der Hilfsauskämmscheibe 29 bezüglich der Auskämmrad-Antriebswelle 30 die Verschiebbarkeit des Universalschlittens 18 parallel zur Auskämmrad-Drehachse 11 nicht beeinträchtigt.

Die Hauptauskämmscheibe 28 und die Hilfsauskämmscheibe 29 sind im Bereich ihres Aussenumfangs identisch zueinander ausgebildet und mit identischen Teil-Auskämmnuten versehen. Im Querschnitt ist jede Teil-Auskämmnut derart ausgebildet, dass ihre in Bezug auf die Laufrichtung des Auskämmrads 6 (d.h. der Laufrichtung der Haupt- und der Hilfsauskämmscheibe 28, 29) vordere Nutwand vom Nutrand in der Umfangsfläche des Auskämmrads an unter einem Winkel von ungefähr 45 ° zu einer Tangente am Nutrand in gerader Linie nach hinten zum vorderen Rand des Nutbodens abfällt. Der Nutboden ist im Wesentlichen parallel zur Umfangslinie ausgebildet. An seinem hinteren Rand schliesst die hintere Nutwand an, die sich im Wesentlichen in radialer Richtung vom Nutboden zur Umfangsfläche erstreckt.

Während des Betriebs werden die Hauptauskämmscheibe 28 und die Hilfsauskämmscheibe 29 synchron zueinander zur Drehung um die Auskämmrad-Drehachse 11 angetrieben, wobei die Haupt- und Hilfsauskämmscheibe 28, 29 derart zueinander synchronisiert sind, dass sie um einen wählbar einstellbaren, zwischen zwei Einstellvorgängen aber konstanten Phasenwinkel zueinander versetzt um die Auskämmrad-Drehachse 11 rotieren. Der Phasenwinkel bzw. der Versatz zwischen der Haupt- und der Hilfsauskämmscheibe 28, 29 ist derart eingestellt, dass sich die Nutquerschnitte von einander entsprechenden Teil-Auskämmnuten der Haupt- und der Hilfsauskämmscheibe 28, 29 in zur Auskämmrad-Drehachse 11 paralleler Richtung (d.h. in Nutlängsrichtung) teilweise oder vollständig überlappen. Im Falle einer vollständigen Überlappung der Nutquerschnitte der in der Haupt- und der Hilfsauskämmscheibe 28, 29 ausgebildeten Teil-Auskämmnuten entspricht der für das Auskämmrad 6 insgesamt wirksame Nutquerschnitt der Auskämmnut 12 dem vollen Nutquerschnitt einer einzigen Teil-Auskämmnut, wie sie in der Haupt- oder der Hilfsauskämmscheibe 28, 29 ausgebildet ist. Im Falle einer lediglich teilweisen Überlappung ist jedoch nur derjenige Bereich des Nutquerschnitts der in der Hauptauskämmscheibe 28 ausgebildeten Teil-Auskämmnut zum Auskämmen eines Querdrahts 1 wirksam, der mit dem Nutquerschnitt der entsprechenden in der Hilfsauskämmscheibe ausgebildeten Teil-Auskämmnut überlappt. Der für die gesamte Auskämmnut 12 des Auskämmrads 6 insgesamt wirksame Nutquerschnitt ist dann kleiner als die Nutquerschnitte der in der Hauptauskämmscheibe 28 und der Hilfsauskämmscheibe 29 ausgebildeten Teil-Auskämmnuten. Durch eine wahlweise Einstellung der Phasenverschiebung zwischen der Haupt- und der Hilfsauskämmscheibe 28, 29 kann somit der für die Auskämmnuten 12 des Auskämmrads 6 wirksame Nutquerschnitt wahlweise eingestellt werden. Es kann insbesondere die für die Auskämmnuten 12 des Auskämmrads 6 wirksame Nutdicke wahlweise eingestellt werden.

Bei einer entsprechenden Ausbildung der Querschnitte der in der Hauptauskämmscheibe 28 und der Hilfsauskämmscheibe 29 ausgebildeten Teil-Auskämmnuten kann zusammen mit der wirksamen Nutdicke auch die wirksame Nuttiefe der Auskämmnuten 12 des Auskämmrads 6 eingestellt werden. Insgesamt bietet das Auskämmrad 6 die Möglichkeit zur Anpassung des Nutquerschnitts bzw. der Nutdicke und/oder der Nuttiefe der Auskämmnuten 12 an Querdrähte 1 mit unterschiedlichen Durchmessern.

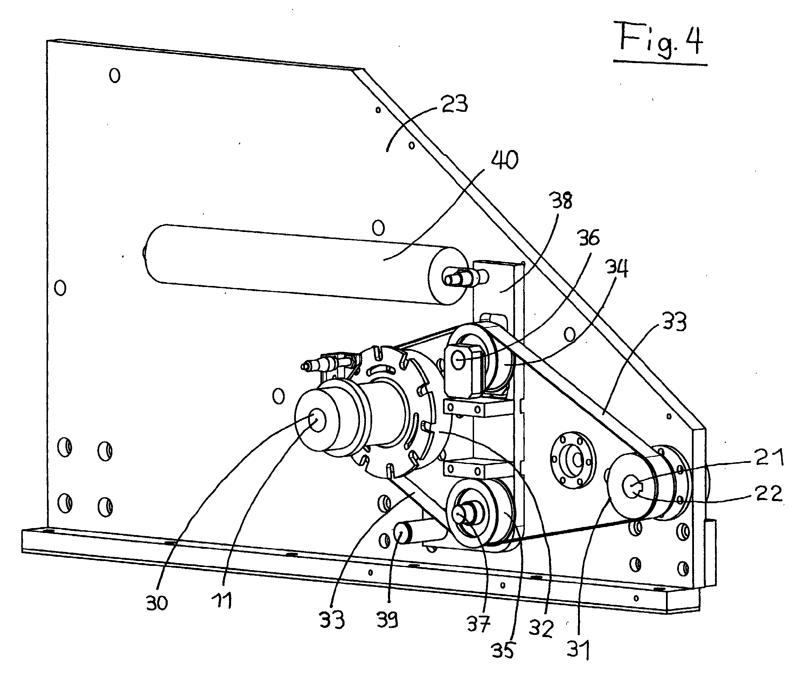

Zur Synchronisation der Haupt- mit der Hilfsauskämmscheibe 28, 29 und zur Einstellung der Phasenverschiebung zwischen der Haupt- und der Hilfsauskämmscheibe 28, 29 ist die Transportband-Antriebswelle 22 mittels eines Antriebsgetriebes mit der Auskämmrad-Antriebswelle 30 gekoppelt, das auf der von den Universalschlitten 17, 18, 19 entfernten Seite einer Seitenwand 23 des stationären Maschinengestells 3 der Querdrahtbereitstellungseinrichtung 10 angeordnet und in Fig. 4 dargestellt ist. Das Antriebsgetriebe umfasst ein erstes Ritzel 32, das drehfest an der Auskämmrad-Antriebswelle 30 angebracht ist, ein zweites Ritzel 31, das drehfest an der Transportband-Antriebswelle 22 angebracht ist, sowie einen über das Ritzel 32 der Auskämmrad-Antriebswelle 30 und das Ritzel 31 der Transportband-Antriebswelle 22 umlaufenden Zahnriemen 33, welcher mit den beiden Ritzel 31, 32 kämmt. Durch den Zahnriemen 33 ist die Transportband-Antriebswelle 22 drehfest mit der Auskämmrad-Antriebswelle 30 gekoppelt. Das Übersetzungsverhältnis zwischen dem ersten Ritzel 32 und dem zweiten Ritzel 31 des Antriebsgetriebes entspricht dem Übersetzungsverhältnis zwischen Ritzel der Hilfsauskämmscheibe 29 und dem durch die Transportband-Antriebsrolle 13 gebildeten Antriebsritzel 13. Dadurch wird eine Synchronisation der Rotation der Hauptauskämmscheibe 28 (die direkt von der Auskämmrad-Antriebswelle 30 angetrieben wird) mit der Rotation der Hilfsauskämmscheibe 29 (die indirekt über die Transportband-Antriebswelle 22 und das Transportband 8 angetrieben wird) erreicht.

Das Antriebsgetriebe umfasst weiter zwei Spannrollen 34, 35, die zwischen der Auskämmrad-Antriebswelle 30 und der Transportband-Antriebswelle 22 im Wesentlichen übereinander angeordnet sind. Die obere Spannrolle 34 dient zum Spannen des oberen Trums des Zahnriemens 33, welches vom Ritzel 32 der Auskämmrad-Antriebswelle 30 über die obere Spannrolle 34 zum Ritzel 31 der Transportband-Antriebswelle 22 läuft und bei dem in Fig. 4 dargestellten Antriebsgetriebe als Leertrum wirkt, da hier die Auskämmrad-Antriebswelle 30 direkt von einem Elektromotor (nicht dargestellt) angetrieben wird, während die Transportband-Antriebswelle 22 lediglich indirekt über den Zahnriemen 33 angetrieben wird. Die untere Spannrolle 35 dient zum Spannen des unteren Trums des Zahnriemens 33, welches vom Ritzel 31 der Transportband-Antriebswelle 22 über die untere Spannrolle 35 zum Ritzel 32 der Auskämmrad-Antriebswelle 30 zurück läuft und als Zugtrum des in Fig. 4 dargestellten Antriebsgetriebes wirkt. Die beiden Spannrollen 34, 35 sind je um eine zur Antriebsrad-Drehachse 11 parallele Drehachse 36, 37 drehbar an einem Spannrollenträger 38 gelagert, der um eine zur Antriebsrad-Drehachse parallele Schwenkachse 39 nach Art einer Wippe schwenkbar an der Seitenwand 23 des stationären Maschinengestells 3 angelenkt ist. Die Schwenkachse 39 des Spannrollenträgers 38 ist an einer von der Verbindungsgeraden zwischen den beiden Drehachsen 36, 37 der Spannrollen 34, 35 distanzierten Stelle angeordnet. Das hat zur Folge, dass durch ein Schwenken des Spannrollenträgers 38 um die Schwenkachse 39 das Längenverhältnis der Längen der beiden Trums des Zahnriemens 33 zwischen der Auskämmrad-Antriebswelle 30 und der Transportband-Antriebswelle 22 verändert wird. Diese Veränderung des relativen Verhältnisses der beiden Trumlängen bewirkt aber eine Änderung der Phasenverschiebung zwischen der Rotation der Hauptauskämmscheibe 28 (die direkt von der Auskämmrad-Antriebswelle 30 angetrieben wird) mit der Rotation der Hilfsauskämmscheibe 29 (die indirekt über die Transportband-Antriebswelle 22 und das Transportband 8 angetrieben wird). Somit kann durch eine Einstellung der Schwenklage des Spannrollenträgers 38 bezüglich der Spannrollenträger-Schwenkachse 39 die Phasenverschiebung zwischen der Rotation der Hauptauskämmscheibe 28 und der Rotation der Hilfsauskämmscheibe 29 und somit der Nutquerschnitt bzw. die Nutdicke der Auskämmnuten 12 der von der Auskämmrad-Antriebswelle 30 und der Transportband-Antriebswelle 22 angetriebenen Auskämmräder 5, 6 eingestellt werden.

Die Schwenklage des Spannrollenträgers 38 bezüglich der Spannrollenträger-Schwenkachse 39 wird mittels eines Stellglieds 40 eingestellt, das als Stellmotor 40 ausgebildet ist und zwischen dem Spannrollenträger 38 und der Seitenwand 23 des stationären Maschinengestells 3 wirkt. Indem der Stellmotor 40 mittels einer Steuerungsvorrichtung automatisch gesteuert betätigt wird, kann die Schwenklage des Spannrollenträgers 38 und somit die Nutdicke der Auskämmnuten 12 automatisch eingestellt werden.

Insgesamt wird durch die Einstellbarkeit der Nutdicke der Auskämmnuten 12 gewährleistet, dass die in den Figuren dargestellte Querdrahtbereitstellungseinrichtung 10 für eine Vielzahl von unterschiedlichen Querdrähten 1 verwendbar ist und jeweils rasch an geänderte Querdrahtdurchmesser angepasst werden kann.

Zusammenfassend ist festzustellen, dass durch die Erfindung eine Drahtvereinzelungsvorrichtung bereit gestellt wird, welche rasch und einfach zur Verarbeitung von Drähten mit verschiedenen Drahtdurchmessern anpassbar ist.

## Patentansprüche

1. Vorrichtung zum Vereinzeln von Drähten (1) eines Drahtbündels oder ähnlichen langen, dünnen gebündelten Objekten, mit einem um eine Auskämmrad-Drehachse (1) drehbaren Auskämmrad (6), das eine im Wesentlichen kreiszylindermantelförmige Oberfläche hat, in welcher wenigstens eine parallel zur Auskämmrad-Drehachse (11) verlaufende Auskämmnut (12) ausgebildet ist, und einer Zuführfläche (2), die zur Aufnahme des Drahtbündels und zum Zuführen der mit ihrer Längsrichtung parallel zur Auskämmrad-Drehachse (11) angeordneten Drähte (1) zum Auskämmrad (6) ausgebildet ist, **gekennzeichnet durch** eine Ausbildung des Auskämmrads (6) derart, dass der zum Auskämmen des Drahts (1) wirksame Querschnitt der Auskämmnut (12) wahlweise einstellbar ist.

2. Drahtvereinzelungsvorrichtung nach Anspruch 1, **dadurch gekennzeichnet, dass** sie Mittel (40) zum automatischen Einstellen des wirksamen Querschnitts der Auskämmnut (12) umfasst.

3. Drahtvereinzelungsvorrichtung nach Anspruch 1 oder 2, **dadurch gekennzeichnet, dass** das Auskämmrad (6) eine erste Scheibe (28) umfasst, die durch erste Scheibentriebsmittel (30) zur Drehung um die Auskämmrad-Drehachse (11) angetrieben wird und eine im Wesentlichen kreiszylindermantelförmige Oberfläche hat, welche eine erste Partie der kreiszylindermantelförmigen Oberfläche des Auskämmrads (6) bildet und in welcher eine erste Partie der Auskämmnut (12) ausgebildet ist, sowie eine zweite Scheibe (29), die durch zweite Scheibenantriebsmittel (22, 8) zur Drehung um die Auskämmrad-Drehachse (11) angetrieben wird und eine im Wesentlichen kreiszylindermantelförmige Oberfläche hat, welche eine zweite Partie der kreiszylindermantelförmigen Oberfläche des Auskämmrads (6) bildet und in welcher eine zweite Partie der Auskämmnut (12) ausgebildet ist, wobei die zweite Scheibe (29) bezüglich der ersten Scheibe (28) parallel zur Auskämmrad-Drehachse (11) versetzt angeordnet ist und wobei weiter gemeinsame Scheibenantriebssteuerungsmittel zur Steuerung der ersten und der zweiten Scheibenantriebsmittel (30, 22, 8) derart vorgesehen sind, dass die beiden Scheiben (28, 29) synchron zueinander, jedoch um einen wählbar einstellbaren Phasenwinkel zueinander verschoben um die Auskämmrad-Drehachse (11) rotieren.

4. Drahtvereinzelungsvorrichtung nach Anspruch 3, **dadurch gekennzeichnet, dass** die in der ersten Scheibe (28) ausgebildete erste Partie der Auskämmnut (12) identisch zu der in der zweiten Scheibe (29) ausgebildeten zweiten Partie der Auskämmnut (12) ausgebildet ist.

5. Drahtvereinzelungsvorrichtung nach Anspruch 3 oder 4, **dadurch gekennzeichnet, dass** die zweiten Scheibenantriebsmittel (22, 8) einen ersten Antriebsriemen (8) zum Antreiben der zweiten Scheibe (29) umfassen, wobei dieser erste Antriebsriemen (8) gleichzeitig als Transportriemen (8) ausgebildet ist, der zur Förderung der vom Antriebsrad (6) vereinzelten Drähte (1) vom Antriebsrad (6) weg dient.

6. Drahtvereinzelungsvorrichtung nach einem der Ansprüche 3 bis 5, **dadurch gekennzeichnet, dass** die Scheibenantriebssteuerungsmittel ein mechanisches Getriebe umfassen, welches die ersten Scheibenantriebsmittel mit den zweiten Scheibenantriebsmittel mechanisch koppelt.

7. Drahtvereinzelungsvorrichtung nach Anspruch 6, **dadurch gekennzeichnet, dass** das mechanische Getriebe einen zweiten Antriebsriemen (33) oder eine Antriebskette umfasst, welcher bzw. welche die ersten Scheibenantriebsmittel (30) mittels eines Zugtrums und eines Leertrums drehfest mit den zweiten Scheibenantriebsmittel (22, 8) koppelt, sowie Einstellmittel zur wahlweisen Einstellung der relativen Länge des Zugtrums zum Leertrum.

8. Drahtvereinzelungsvorrichtung nach Anspruch 7, **dadurch gekennzeichnet, dass** die Einstellmittel ein automatisch betätigbares Stellglied (40) umfassen.
